# EUROPÄISCHE PATENTSCHRIFT

(11) **EP 2 420 423 B1**
(45) Veröffentlichungstag und Bekanntmachung des Hinweises auf die Patenterteilung: **27.03.2013**
(21) Anmeldenummer: 11006664.4
(22) Anmeldetag: 13.08.2011
(51) Int. Cl.: B60W 30/18

(54) **Verfahren zum Vorgeben einer Drehzahl einer Antriebsmaschine eines Antriebssystems**
Method for determining a rotational speed of a drive machine of a drive system
Procédé de programmation d'une vitesse de rotation d'une machine de travail d'un système d'entraînement

(30) Priorität: 21.08.2010 DE 102010035060
(43) Veröffentlichungstag der Anmeldung: 22.02.2012
(73) Patentinhaber: Robert Bosch GmbH, 70469 Stuttgart (DE)
(72) Erfinder: Böhm, Helge, 71636 Ludwigsburg (DE); Meinheit, Hinrich, 74354 Besigheim (DE); Pfister, Jochen, 80636 München (DE)
(74) Vertreter: Thürer, Andreas

(56) Entgegenhaltungen:
- WO-A1-2007/063185
- WO-A1-2008/041892
- US-A1- 2005 071 066

## Beschreibung

Die vorliegende Erfindung betrifft ein Verfahren zum Vorgeben einer Drehzahl einer Antriebsmaschine eines Antriebssystems umfassend zumindest die Antriebsmaschine und eine hydrostatische Antriebseinheit.

### Stand der Technik

Die Erfindung wird im Wesentlichen unter Bezugnahme auf Antriebssysteme beschrieben, die als (mobile) Arbeitsmaschinen (z.B. Bagger, Mobilkräne, Umschlaggeräte) ausgebildet sind, wobei eine hydrostatische Antriebseinheit von einer Antriebsmaschine, üblicherweise einem Verbrennungsmotor, angetrieben wird. Die hydrostatische Antriebseinheit umfasst üblicherweise eine oder mehrere von der Antriebsmaschine angetriebene Hydraulikpumpen und einen oder mehrere damit verbundene Hydraulikmotoren (für rotatorische Bewegungen) und/oder Hydraulikzylinder (für lineare Bewegungen) und ggf. Ventile u.ä. zur Ansteuerung der Verbraucher.

Bei bekannten Arbeitsmaschinen wird häufig aus einer Pedal- oder Joystickstellung direkt eine Soll-Drehzahl für den Verbrennungsmotor abgeleitet. In einfacher Ausgestaltung wird dazu eine Leerlaufautomatik eingesetzt, die bei Nicht-Betätigung der Eingabegeräte als Soll-Drehzahl eine niedrige Leerlaufdrehzahl vorgibt und bei Betätigung der Eingabegeräte eine feste höhere Soll-Arbeitsdrehzahl vorgibt. Diese Lösung ist insbesondere hinsichtlich des Kraftstoffverbrauchs nachteilig, da die Arbeitsdrehzahl nicht an den tatsächlichen Leistungsbedarf angepasst ist.

Ferner ist es möglich, eine variable Soll-Arbeitsdrehzahl in Abhängigkeit von der Betätigung der Eingabegeräte vorzugeben. Dieser proportionale Ansatz ist jedoch ebenfalls in Bezug auf Ansprechverhalten und Kraftstoffverbrauch nachteilig, da die Leistungsfähigkeit der üblicherweise eingesetzten turboaufgeladenen Verbrennungsmotoren, die das Ansprechverhalten einer Arbeitsmaschine auf Gesamtsystemebene wesentlich mitbestimmt, nicht nur von der Drehzahl, sondern auch z.B. vom aktuellen Ladedruck abhängt.

Die WO 2007/063185 A1 beschreibt ein Betriebsverfahren für eine Antriebsmaschine einer forstwirtschaftlichen Arbeitsmaschine, bei dem die Antriebsmaschine in Abhängigkeit von Stellwerten von Eingabegeräten betrieben wird.

Die gattungsgemäße US 2005/0071066 A1 beschreibt ein Verfahren zum Betreiben einer Arbeitsmaschine, bei welcher ein Verbrennungsmotor ein Getriebe und eine dem Getriebe nachgeschaltete Welle antreibt. Eine Drehmoment- bzw. Geschwindigkeitsanforderung wird bereits im Getriebe überwacht und von dort für die Ansteuerung des Verbrennungsmotors verwendet.

Es ist daher wünschenswert, eine Drehzahl für eine Antriebsmaschine eines Antriebssystems so vorzugeben, dass Verbrauch und insbesondere Ansprechverhalten verbessert werden.

### Offenbarung der Erfindung

Erfingdungsgemäß wird ein Verfahren zum Vorgeben einer Drehzahl einer Antriebsmaschine eines Antriebssystems umfassend zumindest die Antriebsmaschine und eine hydrostatische Antriebseinheit mit den Merkmalen des Patentanspruchs 1 vorgeschlagen. Vorteilhafte Ausgestaltungen sind Gegenstand der Unteransprüche sowie der nachfolgenden Beschreibung.

Die Erfindung beinhaltet eine variable, adaptive Solldrehzahlvorgabe für die Antriebsmaschine, bspw. einen Dieselmotor, des Antriebssystems auf Basis der Auswertung unterschiedlicher Systemzustände, eines momentan Ist-Zustands, eines momentanen Soll-Zustands und eines prädizierten Soll-Zustands. Die entsprechend vorzugebende neue Soll-Drehzahl wird wesentlich von der erwarteten Änderung des Antriebssystemzustands (z.B. Änderung der Leistungsabgabe) bestimmt.

Im Gegensatz zu bekannten Ausgestaltungen erfolgt die Vorgabe der Drehzahl nicht lediglich in Abhängigkeit von dem momentanen Leistungsbedarf, sondern auch von einer erwarteten Änderung der Leistungsanforderung. Zweckmäßigerweise wird die Soll-Drehzahl angehoben, wenn eine Laständerung im Antriebssystem zu erwarten ist.

Die Erfindung bietet die vorteilhafte Möglichkeit, einem bevorstehenden Leistungsanstieg frühzeitig zu begegnen und eine Erhöhung der Antriebsmaschinendrehzahl rechtzeitig zu veranlassen, bevor der reale Lastanstieg erfolgt. So kann die Antriebsmaschine beschleunigen und - im Falle eines Verbrennungsmotors - Ladedruck aufbauen. Während der Laständerung kann die erhöhte Drehzahl abgebaut und somit die aufgebaute kinetische Energie genutzt und der Motor bei bereits erhöhtem Ladedruck betrieben werden. Beides erhöht die Systemdynamik, d.h. das Ansprechverhalten des Antriebssystems.

Nach der Laständerung wird die Drehzahl für die Antriebsmaschine zweckmäßigerweise wieder reduziert. Zur Aufrechterhaltung eines erreichten Lastniveaus reicht vorteilhafterweise wieder eine niedrigere Drehzahl aus, so dass hier im Vergleich zu bekannten Systemen eine Schonung, Kraftstoffeinsparung usw. möglich ist. Es kann vorteilhaft ausgenutzt werden, dass die quasi-statische Leistungsabgabe einer Antriebsmaschine, wie z.B. einem Dieselmotor, bereits deutlich unterhalb der Nenndrehzahl das Niveau der Nennleistung erreicht.

Somit ist es möglich, die Dynamik des Antriebssystems auch bei abgesenkter, verbrauchsgünstiger Drehzahl auf einem für den Fahrer akzeptablen hohen Niveau zu halten.

Als Ausgangspunkt für die Solldrehzahlberechnung dient eine sog. Basis-Drehzahl als Arbeits-Drehzahl, die, vorzugsweise deutlich, unterhalb der Nenn-Drehzahl der Antriebsmaschine liegt. Die Basis-Drehzahl kann bei etwa 70-75% der Nenn-Drehzahl liegen. Die Basis-Drehzahl dient als Mindestbetriebsdrehzahl, die zur Erfüllung einer Anzahl von Betriebsaufgaben ausreichend ist. Die Einstellung bzw. Regelung der Basis-Drehzahl kann auf bekannte Weise erfolgen, bspw. basierend auf einer einleitend erwähnten Leerlaufregelung. Die Basis-Drehzahl ist nicht von der von der erwarteten Änderung des Lastzustands abhängig, sondern bspw. nur von Eingabegrößen (z.B. Drehzahlwahl durch den Fahrer).

Zu dieser Basis-Drehzahl wird in Abhängigkeit von der erwarteten Änderung des Lastzustands des Antriebssystems eine Offset-Drehzahl addiert. Die Berechnung der Änderung des Lastzustandes erfolgt in geeigneter Weise unter Berücksichtigung der Ausgabewerte der Eingabegeräte sowie der Sensordaten aus dem Antriebssystem. Kern dieser Berechnung ist der Vergleich des aktuellen Systemzustands (zur Zeit t₀) mit einem prädizierten Systemzustand (zur Zeit t₁). Die Differenz t₁-t₀ liegt vorzugsweise unterhalb 1 Sekunde, bevorzugt bei etwa 200 - 500 ms.

Ausgangspunkt für die Bestimmung des prädizierten Systemzustands ist der aus der Bedienung der Eingabegeräte abgeleitete Soll-Systemzustand zum Zeitpunkt t₀. Hierbei wird der jeweilige Systemzustand zweckmäßig durch Verbraucher- und Pumpenvolumenströme, Verbraucher- und Pumpendrücke sowie Verbraucher- und Pumpenleistungen (mechanisch und hydraulisch) bzw. durch eine geeignete Auswahl aus diesen Größen definiert. Die Ermittlung des Ist-Zustands erfolgt unter Berücksichtigung der Ausgabewerte der Eingabegeräte und deren Verlauf in der Vergangenheit durch eine geeignete Berechnung auf Basis eines Streckenmodells, welches das Antriebssystem und dessen Dynamik beschreibt. Die Aussagekraft dieses Streckenmodells kann durch die Hinzunahme von Messdaten aus dem Antriebssystem verbessert werden. Die Ermittlung des prädizierten Systemzustands erfolgt unter Berücksichtigung des aktuellen Ist- und Soll-Systemzustands und der prädizierten Ansteuersignale. Kern der Prognoserechnungen ist ein geeignetes Streckenmodell, welches das Antriebssystem und dessen Dynamik beschreibt.

Die Berechnung der Offset-Drehzahl, welche zur Basis-Drehzahl hinzuaddiert wird, erfolgt auf Basis eines Vergleichs des Ist-Systemzustands mit dem prädizierten Systemzustands. So kann die Offset-Drehzahl z.B. in Abhängig von der Differenz zwischen einer Ist-Pumpenleistung und der prädizierten Pumpenleistung erfolgen. Ist die prädizierte Leistung größer (vorzugsweise um einen Mindestbetrag) als die aktuelle Leistung, wird für die Offset-Drehzahl ein Wert größer Null berechnet. Erfindungsgemäß kann somit durch entsprechende Vorgabe der Offset-Drehzahl eine hohe Dynamik erzielt werden, wobei der langfristige Leistungsbedarf durch entsprechende Vorgabe der Basis-Drehzahl erfüllt wird.

In vorteilhafter Ausgestaltung findet eine Filterung der Offset-Drehzahl statt, so dass bspw. ein Anstieg schnell, ein Abfall jedoch langsam verläuft. Bevorzugterweise ist die Filterung adaptiv von aktuellen oder prädizierten Systemgrößen abhängig. Dem Fachmann eröffnen sich hierdurch viele Möglichkeiten, die Filterung auszugestalten.

Eine erfindungsgemäße Recheneinheit, z.B. ein Steuergerät einer mobilen Arbeitsmaschine, ist programmtechnisch dazu eingerichtet, ein erfindungsgemäßes Verfahren durchzuführen.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen

Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Figurenbeschreibung
- Figur 1: zeigt schematisch ein Antriebssystem zur Durchführung des erfindungsgemäßen Verfahrens.
- Figur 2: zeigt schematisch eine bevorzugte Ausführungsform der Erfindung anhand eines Ablaufplans.
- Figur 3: zeigt schematisch die Bestimmung eines prädizierten Systemzustands.

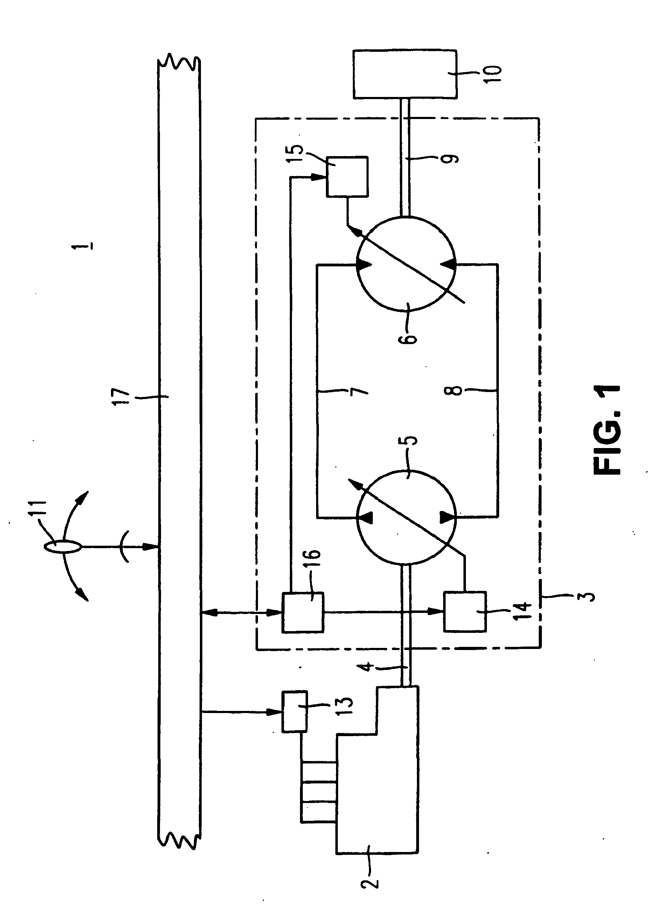

Im Folgenden wird ein Antriebssystem, wie es der vorliegenden Erfindung zugrunde liegen kann, basierend auf Figur 1 der EP 1 754 643 A1 erläutert. In Figur 1 ist ein solches Antriebssystem schematisch dargestellt und insgesamt mit 1 bezeichnet. Das Antriebssystem 1, bspw. eine mobile Arbeitsmaschine, weist hier als Antriebsmaschine einen Verbrennungsmotor 2 auf, der als Dieselmotor ausgeführt ist und eine hydrostatische Antriebseinheit 3 antreibt. Der Verbrennungsmotor 2 ist hierzu über eine Triebwelle 4 mit einer verstellbar ausgeführten Hydraulikpumpe 5, bspw. einer Axialkolbenpumpe, verbunden. Die verstellbare Hydraulikpumpe 5 ist mit einem hier ebenfalls verstellbar ausgeführten Hydraulikmotor 6, bspw. einem Axialkolbenmotor, über eine erste Arbeitsleitung 7 und eine zweite Arbeitsleitung 8 in einem hydraulischen Kreislauf verbunden. Die hydrostatische Antriebseinheit 3 dient bspw. als Fahrantrieb der mobilen Arbeitsmaschine 1. Der verstellbare Hydraulikmotor 6 der hydrostatischen Antriebseinheit 3 ist dazu über eine zweite Triebwelle 9 mit einem angetriebenen Rad 10 der mobilen Arbeitsmaschine verbunden. Zusätzlich zu einem Fahrantrieb verfügt eine mobile Arbeitsmaschine zumindest über eine Arbeitshydraulik (nicht gezeigt), bei der dieselbe oder eine weitere Hydraulikpumpe zur Versorgung wenigstens eines Hydraulikzylinders und/oder Hydraulikmotors eingesetzt wird. Üblicherweise sind auch Ventile zur Ansteuerung der Verbraucher vorhanden.

Zur Vorgabe der Fahrtrichtung sowie der Fahrgeschwindigkeit dient ein Eingabegeräte, bspw. ein Fahrpedal 11, über das ein Steuersignal von einem Bediener des Baggers erzeugt wird. Im vorliegenden Beispiel ist das Fahrpedal 11 über einen Bus 17 mit einem Steuergerät 13 verbunden, das zur Durchführung eines erfindungsgemäßen Verfahrens programmtechnisch eingerichtet ist. Das Steuergerät ist dazu mit dem Dieselmotor 2 verbunden, um durch entsprechende Ansteuerung eine Drehzahl des Dieselmotors vorgeben zu können.

Da Hydraulikpumpe 5 und Hydraulikmotor 15, wie erwähnt, verstellbar ausgeführt sind, weist die hydrostatische Antriebseinheit 3 Verstellvorrichtungen 14 und 15 auf, die das das Fördervolumen der verstellbaren Hydraulikpumpe 5 bzw. das Schluckvolumen des verstellbaren Hydraulikmotors 6 so einstellen, dass die Drehzahl der Triebwelle 4 in eine dem Fahrwunsch entsprechende Drehzahl der zweiten Triebwelle 9 umgesetzt wird. Die Verstellvorrichtungen 14 und 15 sind mit einem Steuergerät 16 zur Ansteuerung verbunden, welches ebenfalls mit dem Bus 17 verbunden ist. Steuergerät 13 und 16 können auch kombiniert ausgeführt sein.

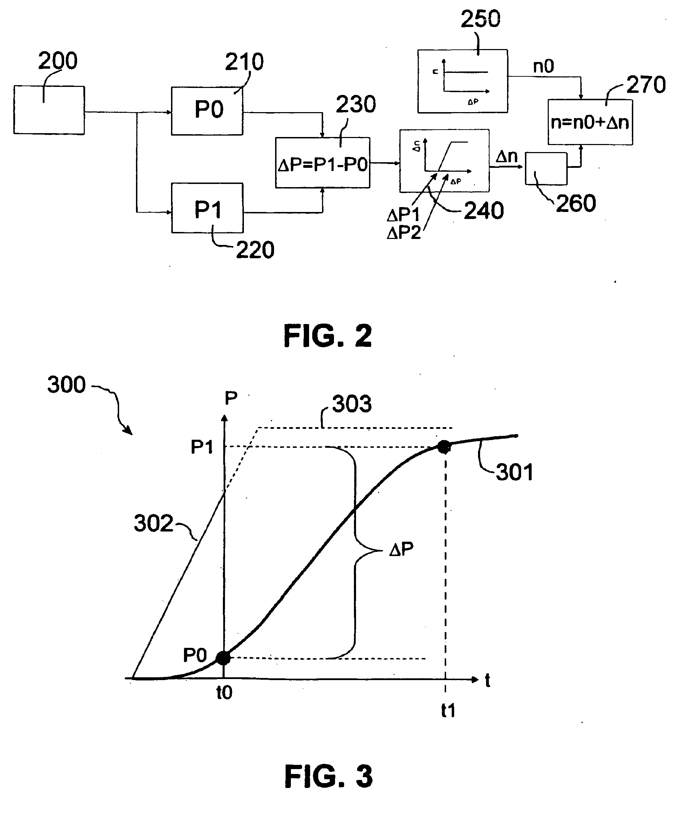

In Figur 2 ist eine beispielhafte Ausführungsform eines erfindungsgemäßen Verfahrens anhand eines Ablaufplans grob schematisch dargestellt und wird im Folgenden beschrieben. In einem Schritt 200 werden eine Reihe von Größen, wie z. B. Aktuatorsignale, Maschinendaten, Sensorsignale usw., ermittelt und zur Berechnung eines aktuellen Systemzustands in Schritt 210 und eines prädizierten Systemzustands in Schritt 220 verwendet.

Als Systemzustand wird im vorliegenden Beispiel der Leistungsbedarf des Antriebssystems 1 (vgl. Figur 1), vorliegend der aktuelle Leistungsbedarf P0 sowie der prädizierte Leistungsbedarf P1 bestimmt. In einem Schritt 230 wird eine Differenz ΔP aus dem prädizierten Leistungsbedarf P1 und dem aktuellen Leistungsbedarf P0 bestimmt.

Die ermittelte Leistungsdifferenz wird einem Berechnungsblock 240 zugeführt, der auf Grundlage der Leistungsdifferenz ΔP eine Offset-Drehzahl An bestimmt. Es sind unterschiedliche Bestimmungsmöglichkeiten denkbar, wobei die genaue Ausgestaltung dem Fachmann überlassen bleibt. In dem Diagramm gemäß Figur 2 wird beispielsweise eine Vorschrift verwendet, bei der die Offset-Drehzahl Δn Null ist, wenn die Leistungsdifferenz ΔP unterhalb eines ersten Schwellwerts ΔP1 liegt, die Offset-Drehzahl Δn sich zwischen dem ersten Schwellwert ΔP1 und einem zweiten Schwellwert ΔP2 linear zu der Leistungsdifferenz ΔP verhält und die Offset-Drehzahl Δn oberhalb des zweiten Schwellwerts ΔP2 konstant bleibt.

In einem Block 250 wird eine Basis-Drehzahl n0 bestimmt, die insbesondere nicht von der Leistungsdifferenz ΔP abhängt. Die Vorgabe der Basis-Drehzahl n0 kann nach bekannten Verfahren, bspw. leistungsabhängig, erfolgen. Die Basis-Drehzahl dient zur Erfüllung einer langfristigen Leistungsanforderung, wohingegen die Offset-Drehzahl vornehmlich zur Erhöhung der Dynamik des Antriebssystems dient.

Die Basisdrehzahl n0 und die Offset-Drehzahl Δn werden einem Additionsblock 270 zugeführt, der daraus die Vorgabedrehzahl n bestimmt. Die Offset-Drehzahl Δn wird dabei über einen Filter 260 geführt, der für einen schnellen Anstieg und einen langsamen Abfall der Offset-Drehzahl Δn sorgt. Dem Filter können über eine adaptive Rückkopplung aktuelle und/oder prädizierte Systemgrößen, wie z.B. aktueller Leistungsbedarf P0, prädizierter Leistungsbedarf P1 usw., zugeführt werden, wobei die Filterfunktion in Abhängigkeit von diesen Systemgrößen verändert wird bzw. veränderbar ist.

Anhand von Figur 3 wird nun die Bestimmung eines prädizierten Systemzustands näher erläutert. Der prädizierte Systemzustand, hier die benötigte Leistung P1, zu einem Zeitpunkt t1 wird dabei ausgehend von dem momentanen Ist-Zustand, hier der momentanen Leistung P0, zum Zeitpunkt t0 bestimmt.

In Figur 3 sind in einem Diagramm 300 eine benötigte Leistung P gegen die Zeit t aufgetragen. Der zeitliche Verlauf der Leistung ist mit 301 bezeichnet. Weiterhin ist ein Ausgabewert, beispielsweise die Position eines Fahrpedals, dargestellt und mit 302 bezeichnet. Aus der Position des Fahrpedals zum Zeitpunkt t0 geht der Soll-Zustand der Maschine hervor. Die Differenz zwischen Ist- und Soll-Zustand gibt zunächst die Richtung der Leistungsentwicklung vor.

Aus der Vorgeschichte der Fahrpedalstellung wird anhand eines Modells eine zukünftige Fahrpedalstellung 303 prädiziert. Dies kann in einfacher Ausgestaltung anhand einer Extrapolation über einen kurzen Zeitraum, beispielsweise wenige 10 ms, erfolgen. Aus der prädizierten Fahrpedalstellung 303 wiederum wird der zukünftige Verlauf der Leistung 301 mittels eines Streckenmodells berechnet. Zur Bestimmung der Leistungsdifferenz ΔP wird die Differenz der Leistung P1 zum Zeitpunkt t1 und der Leistung P0 zum Zeitpunkt t0 bestimmt. Die Zeitspanne t1-t0 liegt zweckmäßigerweise in einem Bereich von 100 bis 500 ms.

## Patentansprüche

1. Verfahren zum Vorgeben einer Drehzahl einer Antriebsmaschine eines Antriebssystems (1) umfassend zumindest die Antriebsmaschine (2) und eine hydrostatische Antriebseinheit (3), **dadurch gekennzeichnet daß** die vorzugebende Drehzahl (n) der Antriebsmaschine (3) in Abhängigkeit von einem momentanen Systemzustand (P0) und einem prädizierten Systemzustand (P1) des Antriebssystems (1) bestimmt wird, wobei der prädizierte Systemzustand (P1) basierend auf prädizierten Stellwerten (302) von Eingabegeräten (11) bestimmt wird.

2. Verfahren nach Anspruch 1, wobei zur Bestimmung des prädizierten Systemzustands (P1) ein Streckenmodell des Antriebssystems (1) verwendet wird.

3. Verfahren nach Anspruch 1 oder 2, wobei die vorzugebende Drehzahl (n) der Antriebsmaschine (3) als Summe einer Basisdrehzahl (n0) und einer Offset-Drehzahl (Δn) vorgegeben wird, wobei die Offset-Drehzahl (An) in Abhängigkeit von dem momentanen Systemzustand (P0) und dem prädizierten Systemzustand (P1) des Antriebssystems (1) bestimmt wird.

4. Verfahren nach Anspruch 3, wobei die Offset-Drehzahl (An) vor der Bestimmung der vorzugebenden Drehzahl (n) mittels eines Filters (260) gefiltert wird.

5. Verfahren nach Anspruch 4, wobei der Filter (260) so eingerichtet ist, dass er einen Verlauf der Offset-Drehzahl (An) zeitlich verändert.

6. Verfahren nach Anspruch 5, wobei der Filter (260) so eingerichtet ist, dass er eine Abnahme der Offset-Drehzahl (Δn) zeitlich verzögert.

7. Verfahren nach Anspruch 4,5 oder 6, wobei eine Funktion des Filters (260) adaptiv in Abhängigkeit von Systemgrößen (P0, P1) vorgegeben wird.

8. Verfahren nach Anspruch 7, wobei die prädizierten Stellwerte (302) basierend auf momentanen und/oder früheren Stellwerten (301) der Eingabegeräte (11) bestimmt werden.

9. Recheneinheit, die dazu eingerichtet ist, ein Verfahren nach einem der vorstehenden Ansprüche durchzuführen.

## Claims

1. Method for prescribing a rotational speed of a drive machine of a drive system (1) comprising at least the drive machine (2) and a hydrostatic drive unit (3), **characterized in that** the rotational speed (n) of the drive machine (3) which is to be prescribed is determined as a function of an instantaneous system state (P0) and a predicted system state (P1) of the drive system (1), the predicted system state (P1) being determined on the basis of predicted manipulated variables (302) of input devices (11).

2. Method according to Claim 1, in which a system model of the drive system (1) is used to determine the predicted system state (P1).

3. Method according to Claim 1 or 2, in which the rotational speed (n) of the drive machine (3) which is to be prescribed is prescribed as the sum of a basic rotational speed (n0) and an offset rotational speed (Δn), the offset rotational speed (Δn) being determined as a function of the instantaneous system state (P0) and the predicted system state (P1) of the drive system (1).

4. Method according to Claim 3, in which the offset rotational speed (Δn) is filtered by means of a filter (260) before the determination of the rotational speed (n) to be prescribed.

5. Method according to Claim 4, in which the filter (260) is set up such that it varies a profile of the offset rotational speed (Δn) as a function of time.

6. Method according to Claim 5, in which the filter (260) is set up such that it delays a decrease in the offset rotational speed (Δn) as a function of time.

7. Method according to Claim 4, 5 or 6, in which a function of the filter (260) is prescribed adaptively as a function of system variables (P0, P1).

8. Method according to Claim 7, in which the predicted manipulated variables (302) are determined on the basis of instantaneous and/or earlier manipulated variables (301) of the input devices (11).

9. Arithmetic unit which is set up to carry out a method according to one of the preceding claims.

## Revendications

1. Procédé de programmation d'une vitesse de rotation d'une machine de travail de système d'entraînement (1) comprenant au moins la machine de travail (2) et une unité d'entraînement (3) hydrostatique, **caractérisé en ce que** la vitesse de rotation (n), à programmer, de la machine de travail (3) est déterminée en fonction d'un état de système momentané (P0) et d'un état de système prévu (P1) du système d'entraînement (1), l'état de système prévu (P1) étant déterminé par des appareils d'entrée (11) sur la base des valeurs de réglage prévues (302).

2. Procédé selon la revendication 1, un modèle de parcours du système d'entraînement (1) étant utilisé pour déterminer l'état de système prévu (P1).

3. Procédé selon la revendication 1 ou 2, la vitesse de rotation (n), à programmer, de la machine de travail (3) étant prédéfinie sous la forme de la somme d'une vitesse de rotation de base (n0) et d'un écart de vitesse de rotation (Δn), l'écart de vitesse de rotation (Δn) étant déterminé en fonction de l'état de système momentané (P0) et de l'état de système prévu (P1) du système d'entraînement (1).

4. Procédé selon la revendication 3, l'écart de vitesse de rotation (Δn) étant filtré à l'aide d'un filtre (260) avant de déterminer la vitesse de rotation (n) à programmer.

5. Procédé selon la revendication 4, le filtre (260) étant conçu de façon à modifier la courbe de l'écart de vitesse de rotation (Δn) dans le temps.

6. Procédé selon la revendication 5, le filtre (260) étant conçu pour décaler une diminution de l'écart de vitesse de rotation (Δn) dans le temps.

7. Procédé selon la revendication 4, 5 ou 6, une fonction du filtre (260) étant prédéfinie de façon adaptable en fonction des ordres de grandeur du système (P0, P1).

8. Procédé selon la revendication 7, les valeurs de réglage (302) prévues étant déterminées sur la base des valeurs de réglage momentanées et/ou précédentes (301) des appareils d'entrée (11).

9. Unité de calcul conçue pour mettre en oeuvre un procédé selon l'une quelconque des revendications précédentes.
